# EUROPEAN PATENT APPLICATION

(11) **EP 2 090 951 A1**
(43) Date of publication of application: **19.08.2009**
(21) Application number: 08425307.9
(22) Date of filing: 30.04.2008
(51) Int. Cl.: G05B 19/418, A61F 13/15

(54) **A method and a system for the automatic regulation of production lines and corresponding computer program product therefor**

(30) Priority: 05.02.2008 IT TO20080090
(71) Applicant: Fameccanica.Data S.p.A., 66020 Sambuceto di S. Giovanni Teatino (Chieti) (IT)
(72) Inventor: Lucia, Oronzo, 65129 Pescara (IT); Di Mattia, Pietro, 64100 Teramo (IT); Simone, Giambattista, 65010 Spoltore (Pescara) (IT)
(74) Representative: Bosotti, Luciano

(57) **Abstract**

A machine to realise articles (10) including a set of elements localised in determined positions (F1, ..., F5) includes respective treatment units S1, ..., S_{K}) capable of being selectively regulated (M1, ..., M_{K}; 104). The regulation system of the machine also includes a memory (112) to store (112) reference values for the above-said positions (F1, ..., F5) and a visual inspection station (106) to detect (1000, 1002) the position (F1, ..., F5) of the various elements (14 to 24) in at least one article (10) realised through the above-said respective treatment units (S1, ..., S_{K}). A processing module (104) compares (1006) the position (F1, ..., F5) detected through the visual inspection station (106) with the stored (112) reference values (112), and, when the position (F1, ..., F5) as detected through the visual inspection station (106) does not correspond to the respective reference value (112), regulates (1010) the corresponding treatment unit (S1, ..., S_{K}) to restore the position (F1, ..., F5) to the reference value (112).

## Description

### Field of the invention

The present invention relates to techniques for the automatic regulation of production lines.

The invention was developed with specific attention to its possible use in production lines for the manufacturing of hygienic-sanitary products. Reference to this possible field of application is not intended as limiting of the scope of the invention.

### Description of the related art

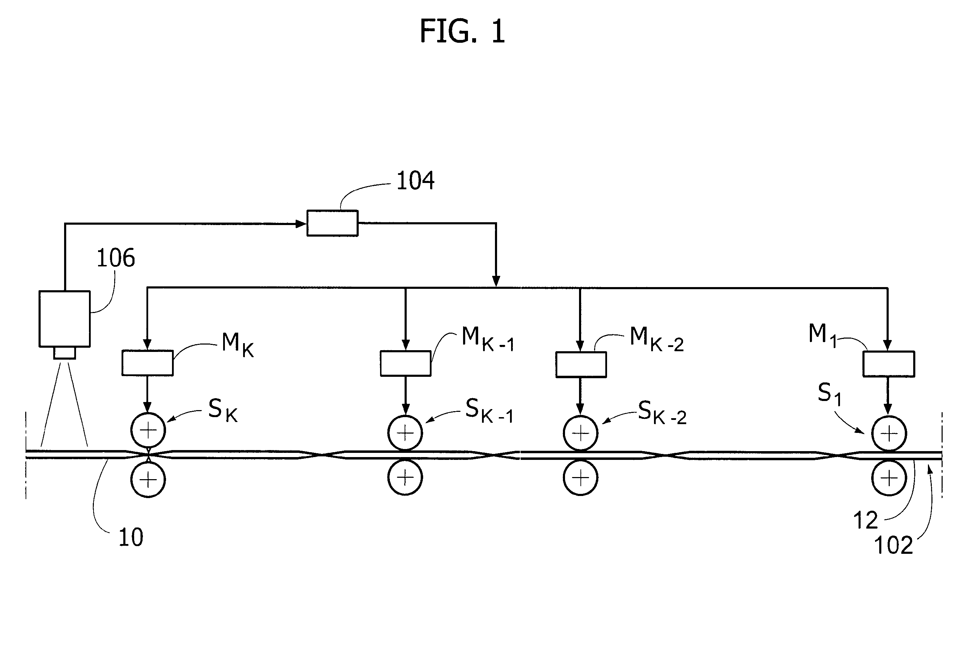

Figure 1 schematically illustrates a hygienic-sanitary article, such as, for example, a pull-up/diaper for babies.

Reference to this type of article is by way of example only: in fact, as will be evident in the following, the solution described herein is adapted for being applied to the production of any article manufactured by advancing base elements (possibly still connected in a chain) though a cascade of work stations realizing additional characteristics (or features) of the article, for example, through the application of additional elements to the base element of the article. All of this also foreseeing the possibility that, when the base elements are connected in a chain, once the manufacturing of articles is completed or almost completed, an additional work station (typically a cutting station) provides for the segmentation of the chain therefore providing single independent articles.

This operating mode is broadly documented in the art, as demonstrated - by way of example only - by the document EP-A-1 523 968.

The article illustrated in figure 1 (which, remember, refers to a possible exemplary embodiment) is indicated in its entirety with 10 and it includes a base element or chassis 12 on which additional elements are successively applied such as:
- an absorbing nucleus or core 14,
- an elasticized front-tape 16,
- a pair of posterior side-panels 18 provided with closing elements 20 at their extremities, and
- a pair of front wings 22 destined to cooperate with the side panels 18 to insure closing of the pull-up/diaper around the waist, once it is put on.

Naturally, what was said above and repeated once more here, is by way of illustration only: for example, even within the field of the same type of article considered (pull-up/diaper) there are possible variants of embodiment of a practically infinite number. For example (this listing not intended as limiting) the chassis 12 and the absorbing nucleus or core 14 can possibly be integrated in a single element from the beginning; the front wings 22 may not be present, etc.

Furthermore, as is well known to one skilled in the art, a product such as a pull-up/diaper as exemplified with 10 in figure 1 usually includes numerous other elements (for example, elastic located longitudinally and surrounding the leg openings, the so-called lateral containing cuffs, etc.) which were neither mentioned, nor illustrated herein since they are not relevant to the purposes of describing and understanding the invention.

What is relevant herein is the fact that for the purpose of insuring the quality of the final product, each of the elements or features previously mentioned is to be located in a precise position and, in particular, at a distance F1, F2, F3, F4, F5 well determined with respect to a reference position. This reference position in susceptible of being identified, for example, as is schematically illustrated in figure 1, with the position of the front edge 24 of the article 10 (that is, the extremity edge in proximity of which the front tape 16 is located). Naturally, the above-said reference position is susceptible of being identified based on any other characteristic or feature of the article 10.

In fact, the same position of the above-said front edge 24 (deriving from a transversal segmentation of the chain of product blanks used in the working phase - so that the front edge 24 of an article 10 corresponds to the posterior edge of the previous article in the exiting sequence of the article from the machine) is itself realised in correspondence to the desired position and therefore can be considered equivalent to one of the above-said features of the product.

By adopting a terminology in current use in fields such as the automatic packaging field or the field of manufacturing of products such as hygienic-sanitary products, the fact that various elements are located at the desired distance F1, ..., F5 corresponds to the fact that the respective application and/or work stations operate under exact "phasing" conditions with respect to a reference or "master" timing, which in the illustrated example can be identified with the timing of the cutting station destined to separate the single articles 10 operates cyclically.

In the production lines used to realise article according to the previously described criteria, the need frequently arises for proceeding to the so-called "format change" that is, to a set of operations directed at enabling the realisation of articles which, though presenting the same structure, have different dimensions (and therefore relative distances between the various elements).

Currently, when in a system or machine of this type, there is a change of format, it is provided for an operator to act on the machine so that the various stations or working units are correctly "phased" with the reference or master timing. This is possible because the various units are usually actuated by servomotors over which it is possible to have practically total control through a motion control system.

To align all of the servomotors to a relative position or reference phase, the operator simply chooses a reference point for the product (for example, the final cut, that is, the anterior edge 24 of the article 10 in figure 1) from which to initiate a position shift or offset with respect to the master and to the various servomotors moving the working unit. The operation is concluded when the position of the various elements of the article have the desired values.

This operation is repeated for each working unit.

The execution modes of such "re-phasing" process are essentially delegated to the operator, who observes the products in exit and over time increments or decrements the phase of the single working unit until the application position of the element in question (or, more generally, the realisation position of the desired feature) falls into the desired range, usually defined by a nominal value and a corresponding tolerance window to be respected.

In any case, this is a demanding operation in terms of time (with consequent penalisation of the working cycle), which requires that the operator have a certain experience.

Within the context considered in the foregoing, certain operating conditions may arise where the "feature" to be realised correctly is the alignment with the body of the article of a layer (for instance a polyethylene film) having matter printed thereon. This printed matter may include drawing or graphic decoration, which must evidently be applied onto the final article with a correct phase. This by also taking into account that the film in question may be subject to variations in length, depending on factors such as, e.g. temperature or productions drifts.

For that reason, it is known that reference signs may be applied onto such films, such as e.g. reference marks, which can be detected optically (in the visible or infrared range, so that these marks are not visible to the human eye) localized at determined positions, at a notionally constant distance. By detecting any "swerving" of the distance between such consecutive marks and the expected, constant reference value, it is possible to intervene on a respective processing unit (one usually has to do with a metering group from which the film unwinds to be applied onto the product) by varying the degree of longitudinal tension applied to the film to bring back to the expected reference value the distance between the determined positions where the marks are located. All this by further ensuring a orrect "phasing" in applying the film onto the article.

The provision, in systems or machines for the realisation of article of the type described, of visual systems for final product quality control is already known. These visual systems are capable of providing information in merit to waste, by detecting, without requiring the intervention of an operator, for example, the fact that one or more article exiting from the machine are defective, requiring the discarding of the same and, possibly, the arrest of the machine to proceed with the appropriate interventions.

### Object and summary of the invention

The invention is based on the recognition of the fact that, in view of the way in which the "re-phasing" sequences are set up and manually carried out by an operator and since each unit of the machine involved is independent from the others since each is managed by a corresponding servomotor, it could be useful to automate the entire procedure, reducing the realignment times of the various units and reducing the error to a minimum. All of this with the further possibility of introducing a monitoring during the normal functioning of the machine so to be able to immediately detect and correct a loss of correct phasing condition.

The present invention has the object of providing a perfected solution capable of fully satisfying the above-presented needs.

According to the present invention, such an object is achieved by means of a method having the features specifically recalled in the claims that follow.

The invention also refers to a corresponding system, as well as a computer program product, loadable in the memory of at least one computer, and including the software code portions for performing the steps of the method of the invention when the product is run on at least one computer.

As used herein, reference to such a computer program product is intended to be equivalent to reference to a computer-readable medium containing instructions for controlling a system to coordinate the performance of the method according to the invention. The reference to "at least one computer" is evidently intended to highlight the possibility of the present invention being implemented in a modular and/or distributed fashion.

The claims form an integral part of the technical disclosure of the invention provided herein.

In an embodiment, the solution described herein foresees that the invention provided by the visual inspection station is used to precisely calculate the distances between the different parts to be inspected of the article in production.

Starting from such data, information is sent to the controller of the movement system so that, extrapolating from the basal information, the controller can appropriately move the servomotor of each unit, putting their functioning "in phase".

With respect to a traditional manual re-phasing system, which requires the intervention of an expert operator, the solution described herein allows the automatic acquisition and processing of the re-phasing data.

Certain embodiments of the arrangement described herein provide for the action of detecting the position of one or more elements on the article realised being performed after the element has been applied onto the article.

Certain embodiments of the arrangement described herein provide for the action of detecting the position of one or more elements on the article realised being performed before the element (e.g. a film more or less tensioned) has been applied onto the article.

Certain embodiments of the arrangement described herein provide for the action of detecting the position of one or more elements on the article realised being performed, dendoing on the element considered, before and/or after the element has been applied onto the article.

### Brief description of the annexed drawings

The invention will now be described, by way of non-limiting example only, with reference to the enclosed drawings wherein:
- figure 1 was discussed previously,
- figure 2 is a functional block schema of a system or machine usable for realising the solution described herein,
- figure 3 illustrates some elements of figure 2 in more detail, and
- figure 4 is a flow diagram representative of the functioning of the solution described herein.

### Detailed description of exemplary embodiments

In the following description, various specific details are given to provide a thorough understanding of embodiments. The embodiments can be practiced without one or more of the specific details, or with other methods, components, materials, etc. In other instances, known structures, materials or operations, are not shown or described in detail to avoid obscuring various aspects of the embodiments.

Reference throughout this specification to "one embodiment" or "an embodiment" means that a particular configuration, structure, or characteristic described in connection with the embodiment is included in at least one embodiment. Thus, the appearances of phrases such as "in one embodiment" or "in an embodiment" in various places throughout this specification are not necessarily all referring to the same embodiment. Furthermore, the particular configurations, structures or characteristics may be combined in any suitable manner in one or more embodiments. The references provided herein are for convenience only and do not define the scope of protection or of the embodiments.

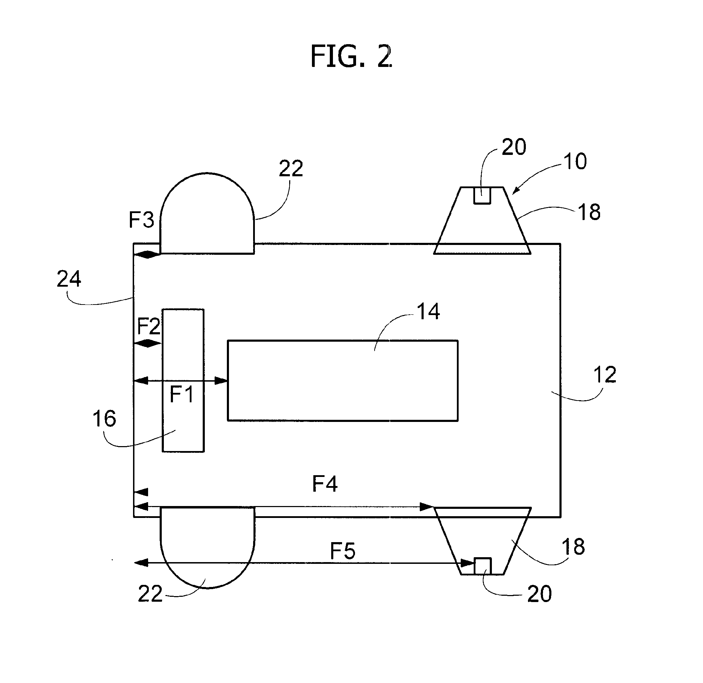

In figure 2, the numeric reference 100 illustrates in its entirety a system ("machine") usable to realise articles, such as, for example, hygiene-sanitary articles 10 illustrated in figure 1 and previously described.

According to a configuration, itself known, the system 100 includes a motorised conveyor 102 (for example, including one or more motorised loop belt conveyor (of known type) allowing advancement from right to left, with reference to the point of observation in figure 2 - a chain of base elements (for example, the chassis 12 in figure 1) for the realisation of the article 10.

Traversing in succession a plurality of work stations S1, ..., Sₖ₋₂, Sₖ₋₁ such base elements are completed with the application of the various other elements 14, 16, 18, 22 completing the article 10. Finally, traversing a additional work station Sₖ (substantially configured as a cutting station, for example, with counter rotating knives) the chain of article blanks advancing on the conveyor 102 is finally segmented into the single articles 10, forming the front edge 24.

As was already said several times in the introductory part of the present description, the nature and characteristics of the article 10 are not determining for the purpose of comprehending the realisation of the invention, whose field of application is absolutely general. Analogously, the characteristics - and the number - of the various stations S1, ..., Sₖ are determining factors of the characteristics of article 10 realised from time to time, and once again, they are not themselves essential features for comprehending and realising the inventions.

For such purpose, it will be sufficient to remind that the various stations S1..., Sₖ act because they are activated by a corresponding motor/actuator M₁, ..., Mₖ subjected to control by a control module 104.

The numeric reference 106 then indicates a visual inspection station (for example, a video camera) that can frame the articles 10 at the exit from the cascade of work stations S1..., Sₖ and detect the position of the various elements 12 to 22, in the context of a single article. For such purpose, the functioning of the visual inspection station 106 can be synchronised with the transit in front of the visual inspection station itself of a reference element present in each article 10; for example, as shown in figure 1, the reference element in question can be the extremity edge 24 and in such case the functioning of the visual inspection station 106 is actually synchronised with the functioning of the cutting station Sₖ.

Figure 2 refers to a positioning of the visual inspection station 106 down stream from the cutting station Sₖ. It will also be appreciated that the act of detecting the position of the various elements of the article 10 can also be performed upstream of the cutting station Sₖ, therefore before the articles 10 are separated. Also, those skilled in the art will note that the act of the detecting the various elements 12 to 22 of the single article 10, represented herein as being performed by a single visual inspection station or video camera 106 could, at least in principle, be realised through a plurality of visual systems (therefore a plurality of video cameras) placed along the cascade of work stations S1, ..., Sₖ. The solution of performing the detection with a single visual inspection station has the advantage of greater overall simplicity of the system.

Specifically, in those applications where the "feature" to be realised correctly is the alignment with the body of the article of a layer (for instance a polyethylene film) having matter printed thereon, the visual inspection station or video camera 106 intended to detect the positions of the reference signs (marks) may be located in correspondence with the metering unit from which the film unwinds to be applied onto the product. The visual inspection station or video camera 106 "reads" in real time the distance between two subsequent marks, thus the position that these marks will have on at least one article realised with the respective portion of film. This even if, of course, the reading action is performed before such a film portion is actually applied onto the article.

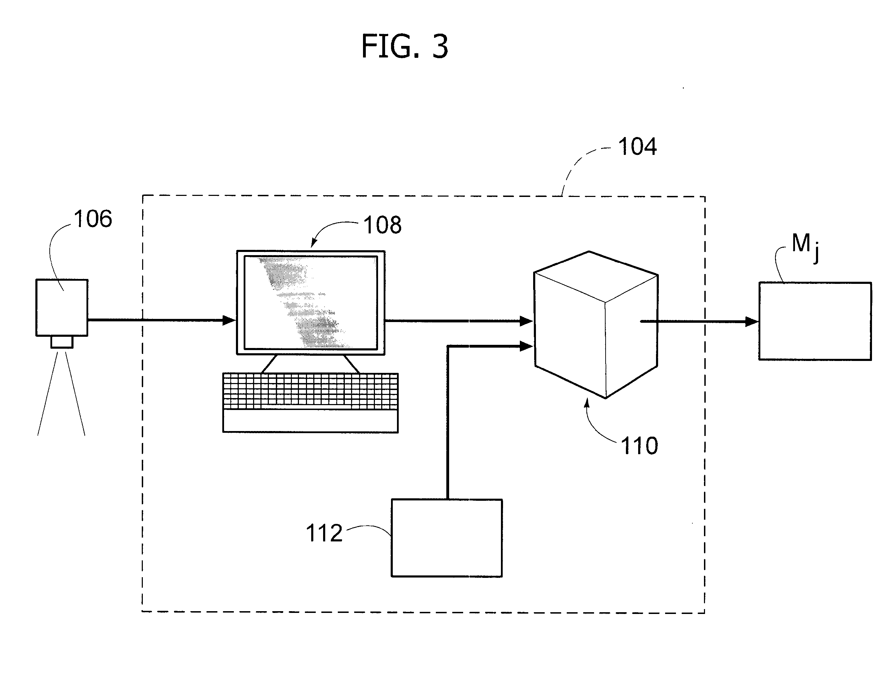

The output signal of the video camera 106 is sent to the input of the control module 104. As schematically illustrated in figure 3, in the exemplary embodiment illustrated herein, the module 104 includes two computer systems 108 and 110 located in cascade.

The main function delegated to the system 108 is that of analysing the image output from the video camera 106 so to detect the position (that is, the distances F1 to F5 in figure 1) of the various elements of an article 10 exiting from the system. This occurs through processing performed on the visual detection data from the video cameral 106, better described in the following.

Instead, the task delegated to system 110 is that of comparing the positional data elaborated by the system 108 starting from the image output of the video camera 106 with the reference values stored in a memory 112 (represented as a separate entity in figure 3, but usually integrated into one of the systems 108 or 110) to then provide the regulation function of the work "phase" of the various units S1, ..., Sₖ, that is, in practice, the control of the work phase of the various servomotors/actuators M1, ..., Mₖ.

In an exemplary embodiment, the position reference values (F1, ..., F5) stored in the memory 112 are determined in the form of a nominal position value with an acceptable variation range with respect to said nominal value.

In an exemplary embodiment, the visual inspection station can be constituted by a matrix video camera, for example a CCD video camera with a resolution of 1024 x 768 pixels such as, for example, the XCL-X700 video camera made by Sony.

The part of the module 104 indicated by 108 in figure 3 can be configured around a personal computed (PC) of current production equipped with an acquisition and image analysis module (for example the card Cognx VPM-8602X).

In substance, the function delegated to the PC 108 (in addition to the general one of system management) is that of detecting from the video camera 106 images corresponding to the single articles 10 exiting from the system or machine 100 to analyse such images (according to known criteria) so to allow detection of the distances F1, ..., F5 to which, by way of example, reference is made in figure 1.

Below in the present description, it is assumed that each of such distances is linked in a univocal way to the functioning "phase" of a corresponding station between the stations S1, ..., Sₖ included in the system 100.

In the example illustrated herein, the distances F1, ..., F5 are all distances detected in the general advancing direction of the articles 10 through the system 100. It will also be appreciated that the same general criteria described in the following concerning the regulation of the intervention phase of the servomotor/actuator M1, ..., Mₖ could also extend to a regulation function of application distances/positions of various elements of the article 10 detected not in the advancing direction (that is, according to the terminology common in the art, "machine direction"), but also in a direction transverse to the advancing direction (that is, "cross direction"). As was already said, the numeric reference 112 also indicates the presence of a card or, in general, a memory area in which the nominal values of the distances F1, ..., F5 together with the corresponding tolerance ranges for each type of article 10 intended to be realised with the illustrated system, are stored.

Therefore, the function of the modules 104 is that of detecting on a single article 10 (or, better yet, on a sample lot of n successive articles 10 exiting from the system 100) the actual values of the distances F1, ..., F5 and to act on the control of the servomotors/actuators M1, ..., Mₖ when and each time it is necessary, modifying the "phase" of the work cycle of the corresponding work stations to restore (and maintain) the values of the distances F1, ..., F5 to within the tolerance ranges provided.

In an exemplary embodiment, the complex of control elements indicated in its entirety with 110 is centred on a PLC (Programmable Logic Control) Siemens S400 with a Profibus interface associated with a servomotor control unit such as, for example, a PPC R02 servomotor control unit made by Rexroth Indramat.

The set indicated with 104 may contain accessory elements of current use destined to allow the correct interfacing between groups 108 and 100. Among such elements a Cognex distribution block for I/O exchange (synchronisation trigger) of PC-video camera, that is, a Profibus CP5611 card to allow exchange of data between personal computer and PLC can be cited as an example.

The possibility of controlling the various servomotors/actuators Mi, ..., Mₖ by the module 110 is represented in figure 3 showing the connection in exit between the module 100 and a generic servomotor/actuator Mj.

In an exemplary embodiment, the module 104 acquires the images to be inspected from the video camera 106, converting the signal into Camera Link video format. The signal can be acquired by the personal computer 108 through an acquisition card (for example, VPM-8602X-000 made by Cognex). This can be provided with an auxiliary connecter for connection to a distribution block (VPM-8600 Cognex, for example) to which a servomotor encoder is also connected (in the case in which a linear video camera is used) and/or an external trigger signal providing the synchronisation to the image acquisition. Such synchronising signal can be referred, at least roughly, to the "master" timing of intervention, for example that of the cutting unit S_{K} (see figure 1).

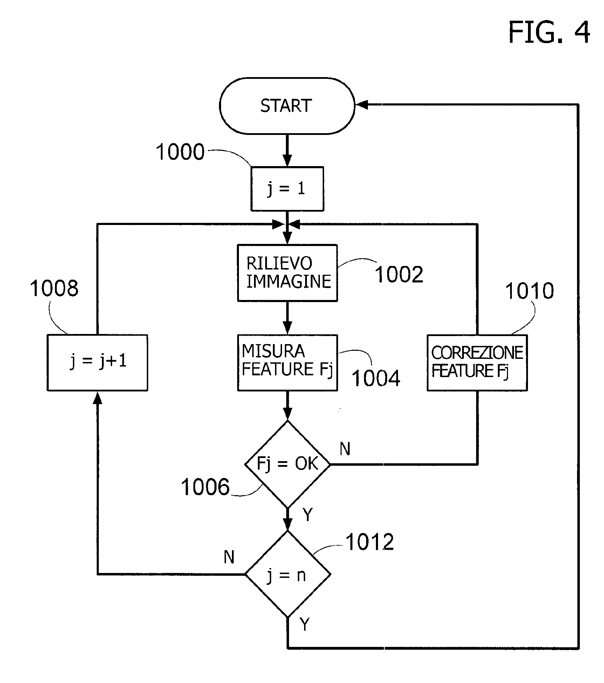

The signal from the video camera 106 can be elaborated by inspection software such as, for example, the ProInspect 3.1 software by Univision susceptible of being supported by a personal computer such as the personal computer 108. By using such inspection software, it is possible to create a function that in fact permits the measurement of the values of the distances F1, ..., F5 starting from the images received from the video camera 106. In the flow diagram in figure 4, the block 1000 represents the zeroing of the index of the n features measured by the system (in the example in figure 1, the features from F1 to F5), while the blocks 1002 and 1004 actually represent the functions of image acquisition and of the determination of the values of the distances F1 to F5. In a preferred way, the distances in question are detected as the arithmetic average of the measurements made on k articles 10 in sequence (where k is a settable parameter in the visual system).

The detected value is sent to the PLC of module 110 (for example, through a Profibus card) and elaborated. In an exemplary embodiment, the input data expected by the relative function consists of two values, one constituted by the actual measurement and the other by a code defining the object (that is, the element or feature from 14 to 22) for which the distance with respect to the reference point (for example, the anterior edge 24 in figure 1) is being calculated. The measured value is compared with the reference value stored in memory 112 and, if the difference between the two falls outside of the tolerance window, a signal is sent to the control function of the servomotor that is representative of the quantity of re-phasing to apply to the servomotor/actuator, which moves the handling unit responsible for the location of the element/realisation of the feature considered.

In those applications where the "feature" to be realised correctly is the alignment with the body of the article of a layer (for instance a polyethylene film) having matter printed thereon, the visual inspection station or video camera 106 "reads" in real time the distance between two subsequent marks, thus the position that these marks will have on at least one article realised with the respective portion of film. The value of the distance between two subsequent marks read by the visual inspection station or video camera 106 is compared with the reference value stored in the memory 112 and, if the difference between the two falls outside the tolerance window, a signal is sent to the control function of the servomotor/actuator of the metering unit for the film which is representative of the amount of which operation of such servomotor/actuator is to be re-phased in order to change the degree of longitudinal tension applied to the film in order to bring the distance between the determined positions where the marks are located back to the desired reference value; this by also ensuring the correct phasing in applying the film onto the article.

The step 1006 corresponds to the verification of the fact that the correct positioning of the single feature Fⱼ that is being measured in the specific step of the flow diagram has been verified. Reference 1012 simply corresponds to the verification of the fact that the correct positioning of all of the characteristics/features of the product has been verified. In the illustrated exemplary embodiment, the verification of the correct realisation of the single characteristics or features is performed in a preestablished sequence according to an order given by a priority index determined for each article in function of the specificity of the same: it will be appreciated in fact that errors in the positioning of a specific element can be more serious, less tolerable with respect to others and therefore such to require a higher priority regulation/correction intervention. Also, keeping in consideration that some of the required interventions may be conditioned by the execution of others on which they might be constrained. Assuming that step 1006 provided a positive output, then in step 1012 it is determined whether all of the features of the product 10 are correctly positioned.

Assuming for now that step 1012 provided a negative output, in a step 1008 the index j relative to the characteristic/feature, that is, to the servomotor/actuator object of the phasing regulation action is incremented and then returning upstream of step 1002, the control cycle of the single feature begins again through the steps 1002, 1004 and 1006 providing for the verification of whether the Fⱼ distance data considered from time to time falls within the range of acceptable values stored in memory 112. If that is the case, with a positive output in steps 1006 and 1012, the system evolves again upstream of step 1000 which zeros the index of the features to be controlled, restoring it to 1 and therefore starting a new complete cycle in which it periodically verifies the fact that the system has maintained the desired regulation conditions providing for the performance of the correction interventions possibly needed, running again the sequence of operations previously described (or even only a subset of the same). If instead step 1006 indicates that an error exists in the realisation of the feature, then the desired correction action is realised in a step 1010 and the system evolves again upstream of step 1002 to verify whether the correction intervention has been sufficient or whether a new correction cycle is required.

It will be appreciated that the flow diagram in figure 4 in general presents the concept according to which the regulation operation is performed in sequence on the various features/distances considered, moving to a successive feature only after the previous feature/distance in the priority order has been correctly adjusted to the acceptable tolerance values.

The experiments performed so far by the Applicant show that this mode of operation is preferable in terms of global results of accuracy and rapidity of execution of the regulation and control operation.

Naturally, without prejudice to the underlying principle of the invention, the details of realisation and the embodiments may vary with respect to what has been described herein as non-limiting, without departing from the scope of the invention as defined by the annexed claims.

## Claims

1. A method for realising articles (10) including a set of elements (14 to 24) located at determined positions (F1, ..., F5) via corresponding treatment units (S1, ..., S_{K}) capable of being selectively regulated (M1, ..., M_{K}; 104), the method including the operations of:
- defining (112) reference values for said determined positions (F1, ..., F5),
- detecting (1000, 1002), through a visual inspection station (106), the position (F1, ..., F5) of said elements (14 to 24) in at least one article (10) realised via said corresponding treatment units (S1, ..., S_{K}),
- comparing (1006) the position (F1, ..., F5) of said elements (14 to 24) as detected through said visual inspection station (106) with said defined reference values (112), and
- when the position (F1, ..., F5) of at least one of said elements (14 to 24) detected through said visual inspection station (106) does not correspond to the relative reference value (112), regulating (1010) the corresponding treatment unit (S1, ..., S_{K}) to restore said position (F1, ..., F5) to the respective reference value (112).

2. A method according to claim 1, including the operation of detecting (1000, 1002), through a visual inspection station (106), the position (F1, ..., F5) of said elements (14 to 24) on a plurality of articles (10) realised through said respective treatment units (S1, _{...}, S_{K}).

3. A method according to claim 1 or claim 2, wherein said articles (10) are realised advancing in cascade through said corresponding treatment units (S1, ..., S_{K}) and wherein said position of said elements (14 to 24) on at least one article (10) is detected as a distance (F1, ..., F5) in the advancing direction of said articles (10) through said respective treatment units (S1, ..., S_{K}).

4. A method according to any of the claims 1 to 3, wherein said position of said elements (14 to 24) on at least one article (10) is detected with respect to a reference element (24) in the article (10).

5. A method according to any of the previous claims, including the operation of synchronising the functioning of said visual inspection station (106) with the transit, in front of the visual inspection station (106), of a reference element (24) in the article (10).

6. A method according to claim 4 or claim 5, wherein said reference element is an extremity edge (24) of the article (10).

7. A method according to any of the previous claims, wherein said articles (10) are realised starting from a chain of articles separated with a cutting operation (S_{K}), including the operation of synchronising the functioning of said visual inspection station (106) with the performance of said cutting operation (S_{K}).

8. A method according to any of the previous claims, wherein said articles (10) are realised starting from a chain of articles separated with a cutting operation (S_{K}), including the operation of detecting (1000, 1002) the position (F1, ..., F5) of said elements (14 to 24) on at least one article (10) downstream of said cutting operation (S_{K}).

9. A method according to any of the previous claims, including the operations of:
- attributing a given order of priority to said elements (14 to 23), and
- performing said operation of comparing (1006) the position (F1, ..., F5) of said elements (14 to 24) and, if performed, said operation of regulating (1010) the corresponding treatment unit (S1, ..., S_{K}) following said order of priority.

10. A method according to any of the previous claims, including the operation of defining (112) said reference values for said positions (F1, ..., F5) as a nominal position value with an acceptable variation range with respect to said nominal value.

11. A method according to any of the previous claims, wherein said elements located at determined positions are reference marks at a given distance on a film applied onto said articles, including the operations of:
- detecting through said visual inspection station (106) the distance between said reference marks,
- comparing (1006) the distance between said reference marks as detected through said visual inspection station (106) with said defined reference values (112), and
- when the distance detected through said visual inspection station (106) does not correspond to the relative reference value (112), regulating (1010) the metering tension of said film applied onto said articles (10) to bring said distance back to said respective reference value (112).

12. A system for regulating the realisation of articles (10) including a set of elements localised at determined positions (F1, ..., F5) via respective treatment units (S1, ..., S_{K}) capable of being selectively regulated (M1, ..., M_{K}; 104), the system including:
- a memory (112) to store (112) the reference values for said determined positions (F1, ..., F5),
- a visual inspection station (106) to detect (1000, 1002) the position (F1, ..., F5) of said elements (14 to 24) in at least one article (10) realised via said corresponding treatment units (S1, ..., S_{K}),
- a processing module (104) to compare (1006) the position (F1, ..., F5) of said elements (14 to 24) detected through said visual inspection station (106) with said reference values stored in said memory (112), and, when the position (F1, ..., F5) of at least one of said elements (14 to 24) detected through said visual inspection station (106) does not correspond to the respective reference value (112), regulating (1010) the respective treatment unit (S1, ..., S_{K}) to restore said position (F1, ..., F5) to said respective reference value (112).

13. A system according to claim 12, wherein said visual inspection station (106) is configured to detect (1000, 1002) the position (F1, ..., F5) of said elements (10 to 24) on a plurality of articles (10) realised through said respective treatment units (S1, ..., S_{K}).

14. A system according to claim 12 or claim 13, wherein said articles (10) are realised advancing in cascade through said respective treatment units (S1, ..., S_{K}) and wherein said visual inspection station (106) is configured to detect (1000, 1002) the position (F1, ..., F5) of said elements (14 to 24) as distance (F1, ..., F5) in the advancing direction of said articles (10) through said respective treatment units (S1, ..., S_{K}).

15. A system according to any of the claims 12 to 14, wherein said visual inspection station (106) is configured to detect (1000, 1002) the position (F1, ..., F5) of said elements (14 to 24) with respect to a reference element (24) in the article (10).

16. A system according to any of the previous claims 12 to 15, wherein said visual inspection station (106) is synchronised with the transit, in front of the same visual inspection station (106) of a reference element (24) in the article (10).

17. A system according to claim 15 or claim 16, wherein said reference element is an extremity edge (24) of the article (10).

18. A system according to any of the previous claims 12 to 17, wherein said articles (10) are realised starting from a chain of articles separated with a cutting operation (S_{K}), wherein said visual inspection station (106) is synchronised with the performance of said cutting operation (S_{K}).

19. A system according to any of the previous claims 12 to 18, wherein said articles (10) are realised starting from a chain of articles separated in a cutting station (S_{K}), wherein said visual inspection station (106) is located downstream of said cutting station (S_{K}).

20. A system according to any of the previous claims 12 to 19, wherein said elements located at determined positions are reference marks at a given distance on a film applied onto said articles, wherein said film is matered with a controllable metering tension in view of application onto said articles (10), the system configured for detecting through said visual inspection station (106) the distance between said reference marks, comparing (1006) the distance between said reference marks as detected through said visual inspection station (106) with said defined reference values (112), and, when the distance detected through said visual inspection station (106) does not correspond to the relative reference value (112), regulating (1010) the metering tension of said film applied onto said articles (10) to bring said distance back to said respective reference value (112).

21. A computer program product loadable in the memory of at least one computer (108, 100) and including software code portions to perform the method according to any of the claims 1 to 10, when the product is run on a computer.
